# EUROPÄISCHE PATENTSCHRIFT

(11) **EP 1 146 408 B1**
(45) Veröffentlichungstag und Bekanntmachung des Hinweises auf die Patenterteilung: **19.07.2006**
(21) Anmeldenummer: 00107685.0
(22) Anmeldetag: 10.04.2000
(51) Int. Cl.: G05B 19/4099, G05B 19/4061

(54) **Verfahren zum Steuern der Arbeitsbewegung eines Werkzeugs zur materialabtragenden Bearbeitung eines Materialblocks**
Process to control the working movement of a tool for removal of material from a material block
Procédé pour commander le mouvement de travail d'un outil pour le traîtement par enlèvement de matière d'un bloc de matière

(43) Veröffentlichungstag der Anmeldung: 17.10.2001
(73) Patentinhaber: Open Mind Software Technologies GmbH, 82234 Wessling (DE)
(72) Erfinder: Koch, Josef, Dr., 81379 München (DE)
(74) Vertreter: Benninger, Johannes

(56) Entgegenhaltungen:
- EP-A- 0 543 141
- WO-A-96/08752
- GB-A- 2 192 075
- US-A- 4 503 373
- US-A- 4 789 931

## Beschreibung

Die Erfindung bezieht sich auf ein Verfahren zum Steuern der Arbeitsbewegung eines Werkzeugs zur materialabtragenden Bearbeitung eines Materialblocks gemäß einer vorgegebenen Werkstücksform, bei dem ein zur materialabtragenden Einwirkung auf den Materialblock dienender Einwirkungsbereich des Werkzeugs längs einer sich in einer im wesentlichen ebenen Bahnfläche erstreckenden ersten Führungsbahn mit einer bestimmten Ausrichtung einer die erste Führungsbahn schneidenden Achse des Werkzeugs in bezug auf die Bahnfläche bewegt wird.

Derartige Verfahren werden insbesondere zur Erzeugung komplizierter Wertstücksformen im Werkzeug- und Formenbau eingesetzt. Dabei wird der Materialblock, aus dem die vorgegebene Werkstücksform hausgearbeitet werden soll, durch den Fräskopf einer dreibis fünfachsigen Fräsmaschine spanabhebend bearbeitet. Eine Optimierung dieser Bearbeitung trägt wesentlich zu einer kostengünstigen Herstellung von Blech- und Kunststoffteilen bei, wie sie beispielsweise in der Automobil- und Luftfahrtindustrie sowie in der Konsumgüterindustrie verwendet werden.

Allerdings werden die zu erzeugenden Werkstücksformen zunehmend gekrümmter und komplexer, wodurch die Anwendung herkömmlicher Fräsverfahren erschwert wird. Insbesondere erfordert die Herstellung von Kavitäten, d. h. stark vertiefter Formhohlräume, in der Werkstücksform eine 3+2-Achsenbearbeitung, bei der herkömmlicherweise der Fräskopf zumindest längs Abschnitten der Führungsbahn unter einem spitzen Winkel zur Drehachse des eigentlichen Fräswerkzeugs angestellt wird. Dabei tritt die Schwierigkeit auf, dass der Fräskopf mit der in dem zu bearbeitenden Materialblock sich ausbildenden Werkstücksform kollidiert, wogegen die herkömmlichen Verfahren keine ausreichende Sicherheit bieten. Darüber hinaus ist die Herstellung von Kavitäten nur in begrenztem Maße möglich.

Aus der US-A-4 503 373 ist ein numerisches Maschinensteuerungsverfahren bekannt, das insbesondere zur 5-achsigen Steuerung von Fräsmaschinen dient.

Die US-A-4 789 931 beschreibt ein Steuerungsverfahren für mehrachsig ansteuerbare Werkzeugmaschinen, insbesondere für 3-achsig steuerbare Fräsmaschinen, bei dem zunächst ein Datensatz für die Werkzeugbahn erzeugt wird, der anschließend als Steuerprogramm für eine NC-gesteuerte Werkzeugmaschine zur Verfügung gestellt werden kann.

Aus der EP-A-0 543 141 ist weiterhin ein Steuerungsverfahren für die dreidimensionale Steuerung einer Werkzeugmaschine bekannt, bei dem zunächst aus bekannten Daten eines zu bearbeitenden Werkstücks ein Datensatz für das Bearbeitungswerkzeug berechnet wird. Danach wird der Datensatz hinsichtlich eines möglichst kurzen Werkzeugwegs und einer möglichst geringen Anzahl von Einzeldaten optimiert.

Die GB-A-2 192 057 beschreibt schließlich ein Verfahren zur Erzeugung eines Datensatzes für ein CAD-CAM-System, bei dem eine Kollisionsberechnung auf Basis einer berechneten Hüllkurve erfolgt. Hierbei ist vorgesehen, dass ein abschnittsweise konstanter Offset als Abstand des Werkzeugs von der Werkstückoberfläche berechnet wird.

Der Erfindung liegt die Aufgabe zugrunde, ein Verfahren der eingangs genannten Art dahingehend auszubilden, dass bei hoher Prozesssicherheit sehr komplexe Werkstücksformen hergestellt werden können.

Erfindungsgemäß wird diese Aufgabe dadurch gelöst, dass für jede Position des Werkzeugs auf der ersten Führungsbahn und die jeweils zugehörige Ausrichtung seiner Achse die Relativlage zwischen der geometrischen Form des Werkzeugs und der jeweiligen Werkstücksform vorausberechnet und im Fall einer außerhalb des Eingriffsbereichs des Werkzeugs liegenden Überschneidung zwischen den beiden Formen eine Kollision vorausgesagt wird. Dieser Aspekt der Erfindung beinhaltet eine automatische Kollisionserkennung und Kollisionsvermeidung. Dabei wird nicht nur die geometrische Form des eigentlichen Bearbeitungswerkzeugs, beispielsweise des langzylindrischen Fräsers, sondern auch des Werkzeughalters berücksichtigt, der bei tiefen Kavitäten so weit in die Werkstücksform eintauchen muss, dass er mit dessen Wandoberfläche kollidieren könnte.

Augrund dieser vorausschauenden Kollisionserkennung erfolgt in einer bevorzugten Ausführungsform die automatische Kollisionsvermeidung dadurch, dass bei einer Kollisionsvoraussage das Maximum des Winkels der Achse gegenüber der Normalenrichtung der Bahnfläche der ersten Führungsbahn, bei dem gerade noch keine Kollision eintritt, berechnet und die Ausrichtung der Achse gemäß diesem maximalen Winkel vorgegeben wird. Mit dieser Neuausrichtung der Achse kann sich dann das Werkzeug ohne jede Unterbrechung des Bearbeitungsvorgangs kollisionsfrei weiterbewegen.

In weiterer Verfeinerung dieser Methode wird dem Umstand, dass die Neuausrichtung der Achse zu einer Lageänderung zwischen dem Einwirkungsbereich des Werkzeugs und dem zu bearbeitenden Materialblock führen kann, dadurch Rechnung getragen, dass in Abhängigkeit von der geometrischen Form des Einwirkungsbereichs des Werkzeugs eine Nachberechnung der ersten Führungsbahn vorgenommen wird.

Als besonders zweckmäßig erweist es sich, dass bei der Berechnung die geometrische Form des Werkzeugs durch eine das Werkzeug radial umschließende Approximationsfläche ersetzt wird. Die Approximationsfläche kann beispielsweise durch in CAD-Systemen übliche aneinander gesetzte Flächenstücke, als Aufbauten aus Solidgeometrien oder durch Punktgitter bestimmt werden, die, da für die Kollisionsvermeidung eine verhältnismäßig grobe Toleranz zugelassen werden kann, die Berechnung der Überschneidung erheblich vereinfachen und beschleunigen. Da das Werkzeug häufig um die Achse herum rotationssymmetrisch ist und der Werkzeughalter im Vergleich zum eigentlichen Bearbeitungswerkzeug zumeist einen größeren Durchmesser aufweist, bieten sich insbesondere konische Approximationsflächen an, die sich von dem Einwirkungsbereich des Werkzeugs aus konisch erweiternd in Richtung des Werkzeughalters und diesen umschließend erstrecken.

In einer weiteren Ausgestaltung des erfindungsgemäßen Verfahrens wird ein von der ersten Führungsbahn beabstandeter Punkt der Achse des Werkzeugs auf einer vorgegebenen zweiten Führungsbahn geführt.

Während die erste Führungsbahn derart gewählt ist, dass auf ihr der materialabtragende Einwirkungsbereich des Werkzeugs, beispielsweise die spanabhebende Spitze eines Fräsers, einer in der Bahnfläche liegenden Kontour der angestrebten Werkstücksform entspricht, wird die zweite Führungsbahn derart geeignet gewählt, daß das Werkzeug, beispielsweise der Fräskopf, mit seiner Achse zu jedem Zeitpunkt des Bewegungsablaufs optimal an die entstehende Wandoberfläche der Werkstücksform angepaßt ist und/oder mit seinem Werkzeughalter in einem Abstand von dieser Wandoberfläche gehalten wird.

Da die Werkstücksformen üblicherweise in CAD-Systemen modelliert werden, stehen sie über integrierte oder standardisierte Schnittstellen in der Form von CAD-Daten als Grundlage für die Vorausberechnung der Führungsbahnen zur Verfügung. Lediglich beispielhaft ist hier auf die üblichen CAD-Formate des Typs Nurbs, Bspline, Bezier, aber auch auf proprietäre Solid-Formate wie BREP und Mockups hinzuweisen. Die solchermaßen vorausberechneten Führungsbahnen werden in Datenformaten beschrieben, die von herkömmlichen CNC-Steuerungen abgearbeitet werden können. Letztere steuern die jeweilige NC-Werkzeugmaschine derart, daß das Werkzeug mit seinen beiden Achsenpunkten der ersten bzw. zweiten Führungsbahn folgt. Beispielsweise handelt es sich bei der Werkzeugmaschine um eine fünfachsige Fräsmaschine, mit der das Fräswerkzeug gleichzeitig längs drei zueinander orthogonaler Ortskoordinatenachsen translatorisch bewegt sowie um zwei zueinander orthogonale Schwenkachsen verschwenkt werden kann.

Die Führungsbahnen müssen nicht notwendigerweise genau ebene Bahnkurven sein, d. h. daß die Bahnflächen, in denen die Führungsbahnen verlaufen, nicht streng eben sein müssen. Weiter ist klar, daß im Verlauf der Bearbeitung des Materialblocks viele Führungsbahnen durchlaufen werden, die sich beispielsweise in zueinander parallel verlaufenden Bahnflächen erstrecken, welche beispielsweise in der Normalenrichtung der Bahnflächen zueinander beabstandet sind. In diesem Fall wird für jede in einer bestimmten Bahnfläche sich erstreckende erste Führungsbahn die betreffende zugeordnete zweite Führungsbahn bestimmt. Das bedeutet, daß die ersten Führungsbahnen ähnlich den Höhenlinien einer kartographischen Abbildung längs der Werkstücksform verlaufen.

Insbesondere ist das erfindungsgemäße Verfahren mit Vorteil für die Generierung von Fräsprogrammen für fünfachsige Fräsmaschinen anwendbar. Doch ist die Anwendung des erfindungsgemäßen Verfahrens darauf nicht beschränkt. Vielmehr eignet es sich auch für die Steuerung der Arbeitsbewegung anderer materialabtragender Werkzeuge, wofür als Beispiel die Bearbeitung durch Laser genannt sei.

Es ist darauf hinzuweisen, daß im Einklang mit bekannten Rechenverfahren die Werkstücksform und auch die Führungsbahnen jeweils nur mit einer der geforderten Toleranz entsprechenden Approximation dargestellt werden müssen, wofür sich bekannte Verfahren zur Approximation von Werkstücksoberflächen und Bahnkurven durch getrimmte Flächen oder Solidgeometrien bzw. Näherungskurven anbieten.

Vorzugsweise wird das erfindungsgemäße Verfahren derart ausgeführt, daß der zur Bahnfläche der ersten Führungsbahn orthogonale Abstand der zweiten Führungsbahn konstant ist. In diesem Fall erstreckt sich beispielsweise die Bahnfläche der ersten Führungsbahn parallel zu der x,y-Ebene eines raumfesten Koordinatensystems, so daß längs der ersten Führungsbahn nur die Koordinaten x und y veränderlich sind, während die dazu orthogonale z-Koordinate fest ist. Die Bahnfläche der zweiten Führungsbahn liegt dazu parallel unter einem anderen festen Wert der z-Koordinate.

In einer vorteilhaften Ausführungsform des erfindungsgemäßen Verfahrens ist vorgesehen, daß die zweite Führungsbahn als der um den zur Bahnfläche der ersten Führungsbahn orthogonalen Abstand des von der zweiten Führungsbahn geführten Punktes der Achse des Werkzeugs verschobene geometrische Ort aller Punkte, die von der ersten Führungsbahn in deren Bahnfläche einen vorgegebenen Abstand aufweisen, bestimmt wird. Das bedeutet, daß bei einer der Normalenrichtung der Bahnfläche der ersten Führungsbahn folgenden Projektion der zweiten Führungsbahn auf die Bahnfläche der ersten Führungsbahn die beiden Führungsbahnen in der im wesentlichen ebenen Bahnfläche gleich beabstandet nebeneinander liegen. Falls die erste Führungsbahn eine geschlossene Bahnkurve ist, liegt die zweite Führungsbahn innerhalb der ersten Führungsbahn, falls die Werkstücksform durch eine Vertiefung in dem Materialblock gebildet wird, und außerhalb der ersten Führungsbahn, falls die Werkstücksform eine aus dem Materialblock herauszuarbeitende Erhebung darstellt.

Gemäß einem weiteren Gedanken der Erfindung ist vorgesehen, daß zu jedem Schnittpunkt der Achse des Werkzeugs mit der ersten Führungsbahn der dazu den kleinsten Abstand aufweisende Punkt der zweiten Führungsbahn als auf der zweiten Führungsbahn geführter Punkt der Achse bestimmt wird. Auf diese Weise wird der Synchronlauf des auf der zweiten Führungsbahn geführten Punktes der Achse des Werkzeugs mit dem mit vorgegebener Geschwindigkeit auf der ersten Führungsbahn geführten Achsenpunkt des Werkzeugs hergestellt. Die Parameterdarstellung der ersten Führungsbahn als Funktion der Zeit, welche die Bewegungsgeschwindigkeit des Achsenpunktes des Werkzeuges auf der ersten Führungsbahn bestimmt, liefert dabei auf einfache Weise die dazu synchrone Parameterisierung der zweiten Führungsbahn. Hierdurch sind in jeder Bewegungsphase die beiden Achsenpunkte des Werkzeugs und damit die Ausrichtung dieser Achse eindeutig bestimmt.

In diesem Zusammenhang erweist es sich als vorteilhaft, daß in weiterer Ausgestaltung des erfindungsgemäßen Verfahrens der Schnittpunkt der Achse mit der ersten Führungsbahn längs dieser mit gleichförmiger Geschwindigkeit bewegt und die zweite Führungsbahn durch eine Approximationskurve angenähert wird, längs der sich der darauf geführte Punkt der Achse des Werkzeugs ruckarm mitbewegt. Bekanntlich wird als Ruck die erste Ableitung der Beschleunigung nach der Zeit, also die dritte Ableitung der Bahnkurve nach der Zeit, bezeichnet. Während durch die Vorgabe der Geschwindigkeit auf der ersten Führungsbahn dort für eine ruckfreie Bewegung gesorgt werden kann, kann der sich ergebende Verlauf der zweiten Führungsbahn stellenweise nicht differenzierbar sein, was an diesen Stellen zu einem unerwünschten Ruck führen würde. Durch eine geeignete Wahl der Approximationskurve, wofür beispielsweise kubische Spline-Funktionen in Betracht kommen, lässt sich der Ruck minimieren, indem die Stetigkeit der dritten Ableitung sichergestellt werden kann.

Weitere Merkmale, Einzelheiten und Vorteile der Erfindung ergeben sich aus der folgenden Beschreibung und der Zeichnung. Hierin zeigen:
- Fig. 1 (a), (b) und (c): schematische Ansichten von Fräswerkzeugen mit unterschiedlich geformten Einwirkungsbereichen
- Fig. 2: eine schematische Darstellung des Fräswerkzeuges bei der Bearbeitung einer Kavität
- Fig. 3: eine ausschnittsweise Aufsicht auf eine Bahnfläche und eine darin verlaufende erste Führungsbahn des Fräswerkzeugs,
- Fig. 4: eine Darstellung zur Erläuterung der Bestimmung einer zweiten Führungsbahn
- Fig. 5: eine schematische Ansicht der Lage des Fräswerkzeugs in bezug auf die beiden Führungsbahnen
- Fig. 6: ein Schema zur Erläuterung des Synchronlaufs längs der ersten und der zweiten Führungsbahn
- Fig. 7: ein Schema zur Erläuterung einer ruckmindernden Approximation der zweiten Führungsbahn
- Fig. 8 (a), (b) und (c): schematische Darstellungen verschiedener Approximationsflächen für die geometrische Form des Werkzeugs
- Fig. 9: eine schematische Darstellung einer Neuausrichtung der Achse des Werkzeugs zur Kollisionsvermeidung und
- Fig. 10: eine schematische Darstellung zur Erläuterung der Nachberechnung der ersten Führungsbahn nach einer Neuausrichtung der Achse.

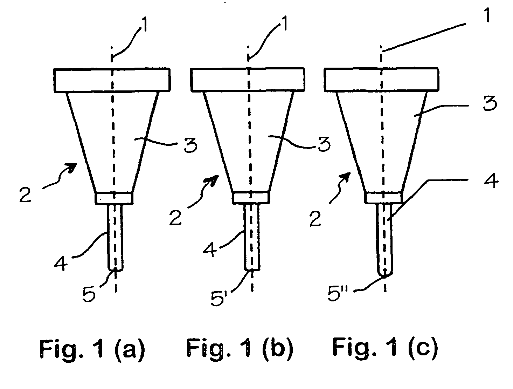

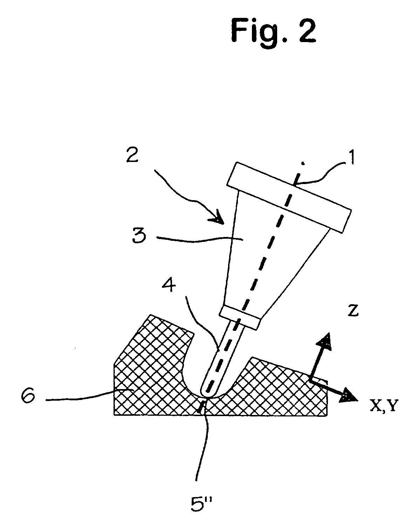

In den Fig. 1 (a), 1 (b) und 1 (c) ist jeweils ein um eine Achse 1 rotationssymmetrisches Werkzeug 2 dargestellt, das einen im wesentlichen konischen Werkzeughalter 3 und einen darin eingespannten zylindrischen Werkzeugschaft 4 aufweist, der durch einen Fräser von im wesentlichen langgestreckter zylindrischer Form gebildet ist. Die Achse 1 stellt dabei die Rotationssymmetrieachse sowohl des konischen Werkzeughalters 3 als auch des langzylindrischen Werkzeugschaftes 4 dar. Die drei dargestellten Werkzeuge 2 unterscheiden sich voneinander nur hinsichtlich der Gestalt des an ihrem dem Werkzeugschaft 4 entgegengesetzten freien Ende ausgebildeten Einwirkungsbereichs 5, 5' bzw. 5", der zum materialabtragenden Eingriff mit einem in Fig. 2 schematisch angedeuteten Materialblock 6 bestimmt ist. So handelt es sich bei dem Werkzeug 2 von Fig. 1 (b) um einen Schaftfräser, bei dem der langzylindrische Werkzeugschaft 4 an seinem freien Ende zur Bildung des Einwirkungsbereichs 5' eine radial gerichtete Endfläche aufweist. Dagegen ist in Fig. 1 (a) ein Radienfräser dargestellt, bei dem im Unterschied zum Schaftfräser von Fig. 1 (b) der Übergang zwischen der Stirnseite und dem Werkzeugschaft 4 an dessen freiem Ende zur Bildung des Eingriffsbereichs 5 mit einem vorbestimmten Eckenradius abgerundet ist. Fig. 1 (c) zeigt dagegen einen Kugelfräser, dessen Werkzeugschaft 4 am freien Ende zur Bildung des Einwirkungsbereichs 5" halbkugelförmig gerundet ist.

Das Werkzeug 2 ist Bestandteil einer nicht dargestellten fünfachsigen Fräsmaschine, durch die es gleichzeitig längs drei zueinander orthogonalen Ortskoordinaten x, y, z translatorisch sowie um zwei zueinander orthogonale Schwenkachsen verschwenkt werden kann. Die jeweilige Schwenkstellung des Werkzeuges wird durch einen zur Richtung der Achse 1 parallelen Einheitsvektor (u, v, w) beschrieben, wobei u² + v² + w² = 1 ist.

Die Fräsmaschine weist eine CNC-Steuerung auf, die von Cam-Systemen bereitgestellte NC-Programme abarbeiten und dadurch eine gewünschte Arbeitsbewegung des Fräswerkzeugs 2 ausführen kann.

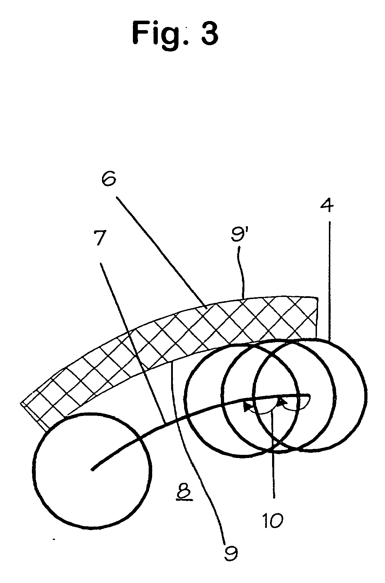

Um durch spanabhebende Bearbeitung des Materialblocks 6 eine vorgegebene Werkstücksform herstellen zu können, wird letztere in einem CAD-System modelliert und durch Daten in üblichen CAD-Formaten beschrieben, welche eine für die Bearbeitung ausreichende Flächenbeschreibung der Werkstücksform darstellen. Hieraus werden erste Führungsbahnen 7 in ebenen Bahnflächen berechnet. In Fig. 3 ist ein Teilstück einer derartigen ersten Führungsbahn 7 in orthogonaler Aufsicht auf ihre ebene Bahnfläche 8 dargestellt. Dabei läßt Fig. 3 auch den Querschnitt durch den Werkzeugschaft 4 und durch die Bearbeitung bereits entstandene Oberflächenstücke 9, 9' des Materialblocks 6 erkennen. Tatsächlich stellt in Fig. 3 die erste Führungsbahn 7 nur einen geglätteten Bahnverlauf dar, während das Bezugszeichen 10 kleine Führungsbögen andeutet, mit denen der Einwirkungsbereich 5, 5' bzw. 5" des Werkzeugschafts 4 gegenüber der geglätteten Führungsbahnform 7 ausschwingt und wieder zurückkehrt.

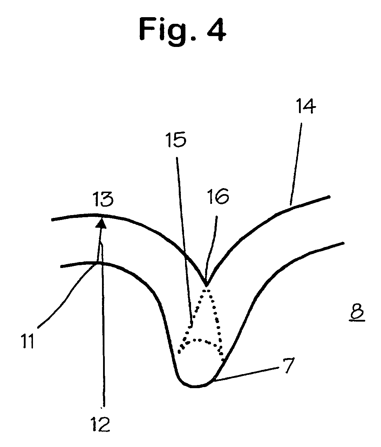

In Fig. 4 ist ebenfalls eine orthogonale Aufsicht auf eine Bahnfläche 8 mit einem darin verlaufenden Abschnitt einer ersten Führungsbahn 7 dargestellt. Zu jedem Punkt 11 der ersten Führungsbahn 7 wird ein zur Tangentenrichtung der ersten Führungsbahn 7 im betreffenden Punkt 11 orthogonaler Abstandsvektor 12 mit einer fest vorgegebenen Länge d ermittelt. Die dem Punkt 11 der ersten Führungsbahn entgegengesetzten Endpunkte 13 der Abstandsvektoren 12 bestimmen somit den geometrischen Ort 14 aller Punkte, die von der ersten Führungsbahn 7 den vorgegebenen Abstand d aufweisen. Bei dieser punktweise durchgeführten Berechnung können sich in engen Krümmungsbereichen der ersten Führungsbahn 7 die in Fig. 4 punktiert dargestellten Abschnitte 15 ergeben, die jedoch die Abstandsvoraussetzung hinsichtlich der gesamten ersten Führungsbahn 7 nicht erfüllen und die ausgehend von ihrem Schnittpunkt 16 beseitigt werden, so daß anschließend der zutreffende geometrische Ort 14 als die verbleibenden Zusammenhangskomponenten erhalten wird.

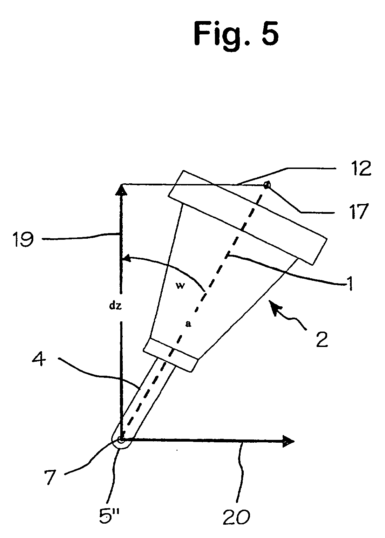

Der in der ebenen Bahnfläche 8 der ersten Führungsbahn 7 gebildete geometrische Ort 14 wird gemäß Fig. 5 um einen zur Bahnebene 8 orthogonalen vorgegebenen Abstand dz verschoben und als zweite Führungsbahn 17 für einen Punkt der Achse 1 des Werkzeugs 2 verwendet. Weiter zeigt Fig. 5, daß die Achse 1 die erste Führungsbahn 7 im Zentrum des Einwirkungsbereichs 5" des als Kugelfräsers ausgebildeten Werkzeugschaftes 4 schneidet. Auf diese Weise bestimmen die beiden Schnittpunkte der Achse 1 mit der ersten und zweiten Führungsbahn 7 bzw. 17 die Ausrichtung der Achse 1 unter einem spitzen Winkel w zur Flächennormalen 19 der ebenen Bahnfläche 8, die in Fig. 5 durch den in der Bahnfläche 8 liegenden Ortsvektor 20 veranschaulicht ist. Hierdurch ist der die Ausrichtung der Achse 1 darstellende Richtungsvektor (u, v, w) vollständig bestimmt.

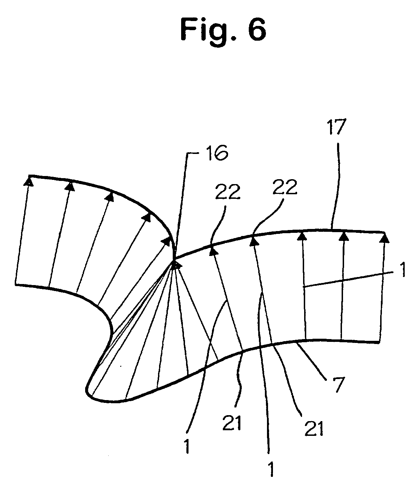

Für die Bahngeschwindigkeit des spanabhebenden Einwirkungsbereichs 5, 5' oder 5" des Werkzeugs 2 längs der ersten Führungsbahn 7 wird eine konstante Geschwindigkeit vorgegeben, so daß sich die in Fig. 6 dargestellten Schnittpunkte 21 der Achse 1 mit der ersten Führungsbahn 7 längs dieser mit gleichförmiger Geschwindigkeit bewegen. Diese Bahngeschwindigkeit längs der ersten Führungsbahn 7 wird durch eine Parameterisierung der (x, y, z)-Werte der ersten Führungsbahn 7 als Funktion der Zeit t und Bildung der Zeitableitung erhalten. Zur Festlegung der Ausrichtung (u, v, w) der Achse 1 des Werkzeugs 2 wird für jeden der Schnittpunkte 21 der Achse 1 mit der ersten Führungsbahn 7 derjenige Punkt 22 auf der zweiten Führungsbahn 17 bestimmt, welcher von dem Schnittpunkt 21 den kleinsten Abstand aufweist. Dadurch sind für jeden Parameterwert t sowohl die drei Ortskoordinaten (x(t), y(t), z(t)) des sich auf der ersten Führungsbahn 7 bewegenden Schnittpunktes 21 als auch die Ortskoordinaten (a(t), b(t), c(t)) des sich auf der zweiten Führungsbahn 17 bewegenden, zugehörigen Punktes 22 bestimmt. Dadurch ist auch schon der die Ausrichtung der Achse 1 des Werkzeugs 2 darstellende normierte Richtungsvektor (u(t), v(t), w(t)) ermittelt und die fünfachsige Fräsbahn (x, y, z, u, v, w), längs der das Werkzeug 2 geführt werden soll, vollständig festgelegt.

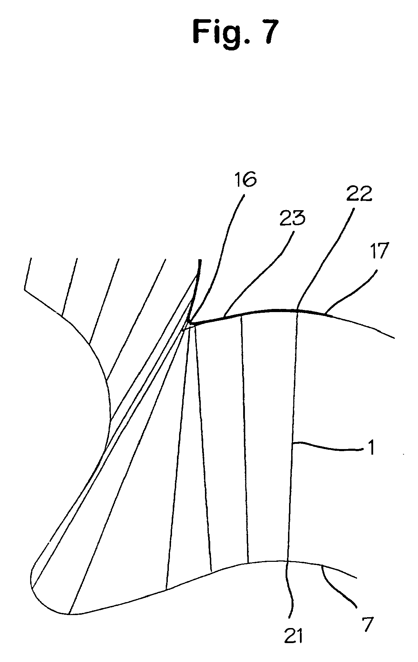

Anhand von Fig. 4 ist bereits dargelegt worden, daß der zur Festlegung der zweiten Führungsbahn 17 gebildete geometrische Ort 14 im Bereich enger Krümmungen der ersten Führungsbahn 7 Knicke, d. h. nicht differenzierbare Stellen 16, aufweisen kann. Die gemäß Fig. 6 gebildete Parameterisierung der zweiten Führungsbahn 17 als Funktion der Zeit liefert bei einmaliger Ableitung die Vorschubgeschwindigkeit längs der zweiten Führungsbahn 17, bei zweimaliger Ableitung die Beschleunigung und bei dreimaliger Ableitung den Ruck. Um das Auftreten einer unerwünscht hohen Ruckerscheinung an den Stellen 16 zu vermeiden, wird gemäß Fig. 7 die zweite Führungsbahn 17 mindestens in der Umgebung dieser Stellen 16 durch eine Approximationskurve 23 angenähert, welche infolge ihrer Differenzierbarkeit eine Ruckminderung bewirkt. Insbesondere sind als Approximationskurven 23 kubische Spline-Funktionen geeignet.

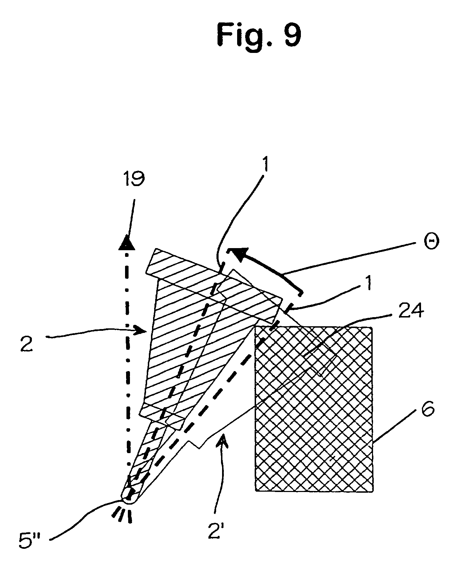

Ebenso wie in Fig. 5 liegt in Fig. 9 die Flächennormale 19 der Bahnfläche 8 in der Zeichnungsebene. Aus diesen beiden Figuren ist bei zusätzlicher Betrachtung von Fig. 4 zunächst zu erkennen, daß in engen Krümmungsbereichen der ersten Führungsbahn 7 eine erhöhte Gefahr für eine Kollision des Werkzeugs 2 mit Wandungsbereichen des Materialblocks 6 besteht. Bei geeigneter Wahl der zweiten Führungsbahn 17 bzw. des Abstandsvektors 12 in Fig. 5 ist die Neigung der Achse 1 des Werkzeugs 2 derart gesteuert, daß die Kollisionsgefahr minimiert wird. Darüber hinaus stellt sich der durch die beiden Führungsbahnen 7 und 17 bestimmte fünfachsige Bewegungsablauf des Werkzeugs 2 für den Maschinenführer als außerordentlich harmonisch dar und wird daher als sicher und voraussehbar akzeptiert.

Bei komplexen Werkstücksformen, insbesondere tiefen Kavitäten, ist jedoch durch die feste Vorgabe des Abstandsvektors 12 eine Kollisionsfreiheit nicht völlig sicherzustellen. Es wird daher zur vorausschauenden Kollisionserkennung für jede Position des Werkzeugs 2 die Relativlage zwischen seiner geometrischen Form und der jeweiligen Werkstücksform betrachtet und das Auftreten einer in Fig. 9 beispielhaft dargestellten Überschneidung 24 zwischen der geometrischen Form des Werkzeugs 2' und der Werkstücksform des Materialblocks 6 vorausberechnet. Daraus ergibt sich eine Kollisionsvoraussage für das den vorausberechneten Führungsbahnen 7, 17 folgende Werkzeug 2. Ansprechend auf eine derartige Kollisionsvoraussage wird der maximale Winkel zwischen der Achse 1 und der Flächennormalen 19 der Bahnfläche 8 berechnet, bei dem gerade noch keine Kollision eintritt. Wenn ein solcher maximaler Winkel gefunden wird, wird die vorher vorausberechnete Position (x, y, z, u, v, w) durch die errechnete kollisionsfreie neue Position (x, y, z, u', v', w') ersetzt. Dies bedeutet, daß die Achse 1 in Richtung der Flächennormalen 19 um einen Winkel Θ derart gedreht wird, daß der Überschneidungsbereich 24 des Werkzeugs 2 aus der Werkstücksform heraustritt. Sofern jedoch keine kollisionsfreie Ausrichtung der Achse 1, beispielsweise wegen einer ungünstigen Vorgabe der zweiten Führungsbahn 17, gefunden werden kann, wird die Generierung des Steuerprogramms abgebrochen. Alternativ kann vorher noch versucht werden, seitliche Abweichungen zu der von der Achse 1 und der Flächennormale 19 aufgespannten Ebene zu berechnen, die an den vorausgesagten Kollisionsstellen eine Kollisionsvermeidung ermöglichen.

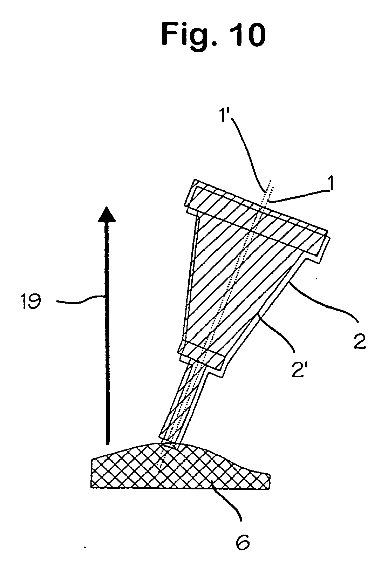

Im Falle des in Fig. 1 (c) dargestellten Kugelfräsers tritt wegen der kugelförmigen Form des materialabtragenden Einwirkungsbereichs 5" bei einer zur Kollisionsvermeidung notwendigen Neuausrichtung der Achse 1 hinsichtlich der Kontaktzone zwischen dem materialabtragenden Einwirkungsbereich 5" und dem Materialblock 6 keine Änderung ein. Dagegen bedarf es im Falle des in Fig. 1 (a) dargestellten Radienfräsers und des in Fig. 1 (b) dargestellten Schaftfräsers wegen der nichtkugelsymmetrischen Form der materialabtragenden Einwirkungsbereiche 5 bzw. 5' einer Nachberechnung der Kontaktzone. Dies ist in Fig. 10 veranschaulicht. Danach verschiebt die Nachberechnung das Werkzeug 2 mit der Achse 1 in der Richtung der Flächennormale 19, wobei in Fig. 10 das solchermaßen verschobene Werkzeug und seine Achse mit den Bezugszeichen 2' bzw. 1' bezeichnet sind. Hierdurch wird die Kontaktzone korrigiert, ohne - jedenfalls bei einer hinterschneidungsfreien Werkstücksform - eine erneute Kollisionsgefahr herbeizuführen. Falls letztere infolge kompliziert hinterschnittener Werkstücksformen dennoch gegeben ist, kann die vorstehend anhand von Fig. 9 erläuterte Kollisionsüberprüfung im Anschluß an die anhand von Fig. 10 erläuterte Nachkorrektur der Kontaktzone erneut durchgeführt werden und dieser Vorgang so lange iteriert werden, bis die Kollisionsfreiheit völlig sichergestellt ist.

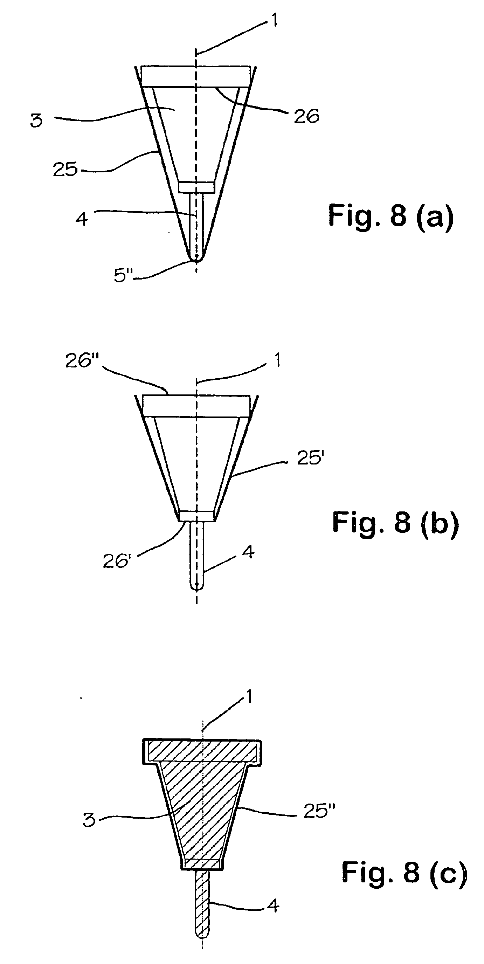

Zur Vereinfachung und Beschleunigung der vorstehend erörterten Kollisionsberechnung ist es zweckmäßig, die möglicherweise komplizierte und daher rechenaufwendige geometrische Form des Werkzeugs 2 durch eine einfachere Approximationsfläche 25 zu ersetzen, die das Werkzeug 2 derart radial umschließt, daß aus einer Kollisionsfreiheit zwischen der Approximationsfläche 25 der Werkstücksform notwendigerweise auch eine Kollisionsfreiheit zwischen dem tatsächlichen Werkzeug 2 und der Werkstücksform folgt. Beispiele hierfür sind in den Fig. 8 (a), (b) und (c) dargestellt. In Fig. 8 (a) approximiert die Approximationsfläche 25 das Werkzeug 2 verhältnismäßig grob in der Form eines zur Achse 1 des Werkzeugs 2 koaxialen Kegelmantels, dessen Spitze sich an den Einwirkungsbereich 5" des Werkzeugschaftes 4 anschmiegt und von dort aus divergierend den maximalen Radius 26 des Werkzeughalters 3 gerade berührt. Eine etwas feinere Annäherung liefert die Approximationsfläche 25' in Fig. 8 (b), die den Werkzeughalter 3 in Anpassung an seinen minimalen Radius 26' und seinen maximalen Radius 26" kegelstumpfförmig umgibt, während der Werkzeugschaft 4 bei der Kollisionsberechnung exakt berücksichtigt wird.

Noch genauer erfolgt die Näherung durch die in Fig. 8 (c) dargestellte Approximationsfläche 25", die den Werkzeughalter 3 unter völliger Anpassung an dessen Form mit geringfügigem radialen Abstand umgibt.

Bei allen diesen Approximationsflächen 25, 25', 25" führt die Kollisionsberechnung bei einer für diese Zwecke ausreichenden Beschreibung der Werkstücksform durch ebene Flächenfacetten zu Kegelschnitten mit der Folge, daß lediglich quadratische Gleichungen auftreten, die geschlossen gelöst werden können. Alternativ kann statt den Flächenfacetten auch ein Punktgitter angewendet werden, das sich mit bekannten Verfahren sehr schnell berechnen läßt. Auch können die Geometriemodelle des Werkzeugs 2 durch Flächen oder Solids beschrieben werden, was eine einfache Durchführung der Berechnung ermöglicht.

### Verzeichnis der Bezugszeichen

- 1: Achse
- 2, 2': Werkzeug
- 3: Werkzeughalter
- 4: Werkzeugschaft
- 5, 5', 5": Einwirkungsbereich
- 6: Materialblock
- 7: erste Führungsbahn
- 8: Bahnfläche
- 9, 9': Oberflächenstücke
- 10: Führungsbögen
- 11: Punkt der ersten Führungsbahn
- 12: Abstandsvektor
- 13: Endpunkt
- 14: geometrischer Ort
- 15: Abschnitte
- 16: Schnittpunkt
- 17: zweite Führungsbahn
- 19: Flächennormale
- 20: Ortsvektor
- 21: Schnittpunkte
- 22: Punkt
- 23: Approximationskurve
- 24: Überschneidung
- 25, 25': Approximationsfläche
- 26, 26', 26": Radien

## Patentansprüche

1. Verfahren zum Steuern der Arbeitsbewegung eines Werkzeugs (2) zur materialabtragenden Bearbeitung eines Materialblocks (6) gemäß einer vorgegebenen Werkstücksform, bei dem ein zur materialabtragenden Einwirkung auf den Materialblock (6) dienender Einwirkungsbereich (5, 5', 5") des Werkzeugs (2) längs einer sich in einer im wesentlichen ebenen Bahnfläche (8) erstreckenden ersten Führungsbahn (7) mit einer bestimmten Ausrichtung einer die erste Führungsbahn (7) schneidenden Achse (1) des Werkzeugs (2) in bezug auf die Bahnfläche (8) bewegt wird, **dadurch gekennzeichnet, dass** für jede Position des Werkzeugs (2) auf der ersten Führungsbahn (7) und die jeweils zugehörige Ausrichtung seiner Achse (1) die Relativlage zwischen der geometrischen Form des Werkzeugs (2) und der jeweiligen Werkstücksform vorausberechnet und im Fall einer außerhalb des Eingriffsbereichs (5, 5', 5") des Werkzeugs (2) liegenden Überschneidung (24) zwischen den beiden Formen eine Kollision vorausgesagt wird.

2. Verfahren nach Anspruch 1, **dadurch gekennzeichnet, dass** bei einer Kollisionsvoraussage das Maximum des Winkels der Achse (1) gegenüber der Normalenrichtung (19) der Bahnfläche (8) der ersten Führungsbahn (7), bei dem gerade noch keine Kollision eintritt, berechnet und die Ausrichtung der Achse (1) gemäß diesem maximalen Winkel vorgegeben wird.

3. Verfahren nach Anspruch 2, **dadurch gekennzeichnet, dass** in Abhängigkeit von der geometrischen Form des Einwirkungsbereichs (5, 5', 5") des Werkzeugs (2) eine Nachberechnung der ersten Führungsbahn (7) vorgenommen wird.

4. Verfahren nach einem der Ansprüche 1 bis 3, **dadurch gekennzeichnet, dass** bei der Berechnung die geometrische Form des Werkzeugs (2) durch eine das Werkzeug (2) radial umschließende Approximationsfläche (25, 25', 25") ersetzt wird.

5. Verfahren nach einem der Ansprüche 1 bis 4, **dadurch gekennzeichnet, dass** ein von der ersten Führungsbahn (7) beabstandeter Punkt der Achse der Achse (1) des Werkzeugs (2) auf einer vorgegebenen Führungsbahn (17) geführt wird.

6. Verfahren nach Anspruch 5, **dadurch gekennzeichnet, dass** der zur Bahnfläche (8) der ersten Führungsbahn (7) orthogonale Abstand (dz) der zweiten Führungsbahn (17) konstant ist.

7. Verfahren nach Anspruch 5 oder 6, **dadurch gekennzeichnet, dass** die zweite Führungsbahn (17) als der um den zur Bahnfläche (8) der ersten Führungsbahn (7) orthogonalen Abstand (dz) des von der zweiten Führungsbahn geführten Punktes der Achse (1) des Werkzeugs (2) verschobene geometrische Ort (14) aller Punkte (13), die von der ersten Führungsbahn (7) in deren Bahnfläche (8) einen vorgegebenen Abstand (d) aufweisen, bestimmt wird.

8. Verfahren nach einem der Ansprüche 5 bis 7, **dadurch gekennzeichnet, dass** zu jedem Schnittpunkt (21) der Achse (1) des Werkzeugs (2) mit der ersten Führungsbahn (7) der dazu den kleinsten Abstand aufweisende Punkt (22) der zweiten Führungsbahn (17) als auf der zweiten Führungsbahn (17) geführter Punkt der Achse (1) bestimmt wird.

9. Verfahren nach einem der Ansprüche 5 bis 8, **dadurch gekennzeichnet, dass** der Schnittpunkt (21) der Achse (1) mit der ersten Führungsbahn (7) längs dieser mit gleichförmiger Geschwindigkeit bewegt und die zweite Führungsbahn (17) durch eine Approximationskurve (23) angenähert wird, längs der sich der darauf geführt Punkt (22) der Achse (1) des Werkzeugs (2) ruckarm mitbewegt.

## Claims

1. Process to control the working movement of a tool (2) for removal of material from a material block (6) according to a prescribed workpiece form, in which an effective region (5, 5', 5") of the tool (2) serving to provide the material-removing effect on the material block (6) is moved along a first guiding path (7), extending in a substantially planar path area (8), with a specific alignment of an axis (1) of the tool (2) intersecting the first guiding path (7) with respect to the path area (8), **characterized in that**, for each position of the tool (2) on the first guiding path (7) and the respectively associated alignment of its axis (1), the relative position between the geometrical form of the tool (2) and the respective workpiece form is pre-calculated and, in the case of an overlap (24) between the two forms lying outside the effective region (5, 5', 5") of the tool (2), a collision is predicted.

2. Process according to Claim 1, **characterized in that**, in the event of a collision prediction, the maximum of the angle of the axis (1) with respect to the direction (19) normal to the path area (8) of the first guiding path (7) at which a collision does not quite occur is calculated and the alignment of the axis (1) is prescribed according to this maximum angle.

3. Process according to Claim 2, **characterized in that** a post-calculation of the first guiding path (7) is performed in dependence on the geometrical form of the effective region (5, 5', 5'') of the tool (2).

4. Process according to one of Claims 1 to 3, **characterized in that**, in the calculation, the geometrical form of the tool (2) is substituted by an approximation area (25, 25', 25") radially enclosing the tool (2).

5. Process according to one of Claims 1 to 4, **characterized in that** a point of the axis (1) of the tool (2) that is kept at a distance from the first guiding path (7) is guided on a prescribed guiding path (17).

6. Process according to Claim 5, **characterized in that** the distance (dz) orthogonal to the path area (8) of the first guiding path (7) from the second guiding path (17) is constant.

7. Process according to Claim 5 or 6, **characterized in that** the second guiding path (17) is determined as the geometrical locus (14) of all points (13) which are at a prescribed distance (d) from the first guiding path (7) in the path area (8) of the latter, displaced by the distance (dz) orthogonal to the path area (8) of the first guiding path (7) of the point of the axis (1) of the tool (2) guided by the second guiding path.

8. Process according to one of Claims 5 to 7, **characterized in that**, at each point of intersection (21) of the axis (1) of the tool (2) with the first guiding path (7), the point (22) at the smallest distance from it of the second guiding path (17) is determined as the point of the axis (1) that is guided on the second guiding path (17).

9. Process according to one of Claims 5 to 8, **characterized in that** the point of intersection (21) of the axis (1) with the first guiding path (7) is moved along the latter at a uniform speed and the second guiding path (17) is approximated by an approximation curve (23), along which the point (22) of the axis (1) of the tool (2) guided on it is moved at the same time with little jerking.

## Revendications

1. Procédé pour commander le mouvement de travail d'un outil (2) pour l'usinage par enlèvement de matière d'un bloc de matière (6) suivant une forme de pièce prédéfinie, dans lequel une région d'action (5, 5', 5") de l'outil (2) servant à agir par enlèvement de matière sur le bloc de matière (6) est déplacée le long d'une première voie de guidage (7) s'étendant dans une surface de voie (8) substantiellement plane, avec une certaine orientation d'un axe (1) de l'outil (2) coupant la première voie de guidage (7) par rapport à la surface de voie (8), **caractérisé en ce que** pour chaque position de l'outil (2) sur la première voie de guidage (7) et l'orientation respective associée de son axe (1), la position relative entre la forme géométrique de l'outil (2) et la forme respective de la pièce est calculée au préalable et dans le cas d'une intersection (24) entre les deux formes, se trouvant en dehors de la région d'action (5, 5', 5") de l'outil (2), une collision est prédite.

2. Procédé selon la revendication 1, **caractérisé en ce que** dans le cas d'une prédiction de collision, le maximum de l'angle de l'axe (1) par rapport à la direction normale (19) de la surface de voie (8) de la première voie de guidage (7), pour lequel il ne se produit plus de collision, est calculé et l'orientation de l'axe (1) est prédéfinie en fonction de cet angle maximum.

3. Procédé selon la revendication 2, **caractérisé en ce que** l'on effectue une révision du calcul de la première voie de guidage (7) en fonction de la forme géométrique de la région d'action (5, 5', 5") de l'outil (2).

4. Procédé selon l'une quelconque des revendications 1 à 3, **caractérisé en ce que** lors du calcul, la forme géométrique de l'outil (2) est remplacée par une surface d'approximation (25, 25', 25") entourant radialement l'outil (2).

5. Procédé selon l'une quelconque des revendications 1 à 4, **caractérisé en ce qu'**un point de l'axe (1) de l'outil (2) espacé de la première voie de guidag (7) est guidé sur une voie de guidage (17) prédéfinie.

6. Procédé selon la revendication 5, **caractérisé en ce que** la distance (dz) de la deuxième voie de guidage (17) perpendiculaire à la surface de la voie (8) de la première voie de guidage (7) est constante.

7. Procédé selon la revendication 5 ou 6, **caractérisé en ce que** la deuxième voie de guidage (17) est déterminée en tant que lieu géométrique (14) de tous les points (13) qui présentent une distance (d) prédéfinie depuis la première voie de guidage (7) dans sa surface de voie (8), décalé de la distance (dz) perpendiculaire à la surface de voie (8) de la première voie de guidage (7), du point de l'axe (1) de l'outil (2) guidé par la deuxième voie de guidage.

8. Procédé selon l'une quelconque des revendications 5 à 7, **caractérisé en ce qu'**en chaque point d'intersection (21) de l'axe (1) de l'outil (2) avec la première voie de guidage (7), le point (22) de la deuxième voie de guidage (17) présentant la plus petite distance par rapport à ce point est déterminé comme le point de l'axe (1) guidé sur la deuxième voie de guidage (17).

9. Procédé selon l'une quelconque des revendications 5 à 8, **caractérisé en ce que** le point d'intersection (21) de l'axe (1) avec la première voie de guidage (7) est déplacé le long de celle-ci avec une vitesse uniforme et la deuxième voie de guidage (17) est approximée par une courbe d'approximation (23) le long de laquelle se déplace sans secousses le point (22) de l'axe (1) de l'outil (2) guidé sur celle-ci.
